# EUROPEAN PATENT APPLICATION

(11) **EP 4 657 396 A1**
(43) Date of publication of application: **03.12.2025**
(21) Application number: 25172812.7
(22) Date of filing: 28.04.2025
(51) Int. Cl.: G06V 30/146, G06V 30/413

(54) **SYSTEMS AND METHODS FOR OPTICAL CHARACTER RECOGNITION USING TARGETED REGIONS OF INTEREST**

(30) Priority: 31.05.2024 IN 202411042452
(71) Applicant: Hand Held Products, Inc., Charlotte, NC 28202 (US)
(72) Inventor: SHETTY, Akshatha, Charlotte, 28202 (US); MURTHY, Arjun, Charlotte, 28202 (US); BOORAVILLI, Dileep, Charlotte, 28202 (US); PATIL, Neelima, Charlotte, 28202 (US); KUMAR, Sandeep, Charlotte, 28202 (US); MEWUNDI, Sudhindra Dattatreya, Charlotte, 28202 (US); JOSHI, Vasudevakrishna, Charlotte, 28202 (US); K N, Vinod, Charlotte, 28202 (US)
(74) Representative: Haseltine Lake Kempner LLP

(57) **Abstract**

Embodiments of the present disclosure provide systems and methods for optical character recognition (OCR) using targeted regions of interest (ROIs). In one embodiment, a method includes receiving, by one or more processors, data representative of an image comprising a text string, causing, by the one or more processors, a user interface to display the image comprising the text string, causing, by the one or more processors, the user interface to display a window on the image, the window representative of a region for performing an OCR operation, and performing, by the one or more processors, the OCR operation for the region based at least in part on a composite directionality condition of the text string. In some examples, the composite directionality condition of the text string includes a reading direction of the text string and a character orientation of the text string.

## Description

### TECHNICAL FIELD

Embodiments of the present disclosure generally relate to the field of text processing, and specifically to systems and methods for optical character recognition (OCR) using targeted regions of interest (ROIs).

### BACKGROUND

Various optical character recognition (OCR) technologies have been widely utilized to covert printed or imaged text into editable and/or machine-readable text. For example, a computing device equipped with a camera may image a text string, such as a text string on an object and/or a text string in a document. The computing device may then perform one or more OCR operations to identify each character of the text string and output the text string in a format that is editable or otherwise capable of being communicated or analyzed by a computing device. In some examples, OCR technologies may be utilized to identify text strings on various objects. For example, a computing device may utilize one or more OCR operations to identify text strings on license plates, packages, shipping containers, products, vehicles, and/or the like. However, conventional techniques for identifying such text strings may involve manually rotating a computing device such that the text string is displayed horizontally in a preview image. In some other examples, a barcode may be utilized to orient an image for OCR. For example, a computing device may first scan a barcode to determine an orientation of the barcode and an orientation of a text string that is adjacent to the barcode. However, in many applications, text strings are not associated with a barcode, which may prevent OCR from being effectively utilized.

### BRIEF SUMMARY

In accordance with a first aspect of the disclosure, a method is provided. In some embodiments, the method is executable by one or more computing devices embodied in hardware, software, firmware, and/or any combination thereof as described herein. In some examples, the method may include receiving, by one or more processors, data representative of an image comprising a text string; causing, by the one or more processors, a user interface to display the image comprising the text string; causing, by the one or more processors, the user interface to display a window on the image, the window representative of a region for performing an optical character recognition (OCR) operation; and performing, by the one or more processors, the OCR operation for the region based at least in part on a composite directionality condition of the text string.

In some examples, the composite directionality condition of the text string comprises (i) a reading direction of the text string and (ii) a character orientation of the text string.

In some examples, the reading direction of the text string comprises (i) a top-to-bottom reading direction, (ii) a left-to-right reading direction, (iii) a right-to-left reading direction, or (iv) a bottom-to-top reading direction.

In some examples, the character orientation of the text string comprises one or more rotational values for one or more characters of the text string.

In some examples, the method includes receiving, by the one or more processors, user input indicative of the composite directionality condition of the text string, wherein the OCR operation is based at least in part on the user input.

In some examples, the method includes determining, by the one or more processors, the composite directionality condition of the text string based at least in part on (i) a character orientation of the text string and (ii) a reading direction of the text string, wherein performing the OCR operation is based at least in part on determining the composite directionality condition.

In some examples, the method includes determining, by the one or more processors, an object type for an object in the image; determining, by the one or more processors, a rotational orientation of the object based at least in part on the object type; and determining, by the one or more processors, the composite directionality condition of the text string based at least in part on the rotational orientation of the object. In some examples, the object comprises a shipping container.

In some examples, the method includes receiving, by the one or more processors, user input via the user interface that causes the display of the window to change from a first orientation to a second orientation, wherein the OCR operation is based at least in part on the second orientation.

In some examples, the method includes receiving, by the one or more processors, user input that causes the user interface to freeze the image; and receiving, by the one or more processors, user input that selects a size and a position of the window based at least in part on freezing the image.

In accordance with a second aspect of the disclosure, an apparatus is provided. In one example embodiment of the apparatus, the apparatus includes one or more processors and a memory storing instructions that, when executed by the one or more processors, cause the apparatus to perform any one or more of the methods described herein. A second example apparatus includes means for performing each step of any one of the methods described herein.

In accordance with a third aspect of the disclosure, a system is provided. In one example embodiment of the system, the system includes a user interface and one or more processors in communication with the user interface, wherein the one or more processors are configured to perform any one or more of the methods described herein. In one example embodiment of the system, an example system includes at least one non-transitory computer-readable storage medium having computer program code stored thereon that, in combination with one or more processors, is configured for performing any one of the example methods described herein.

### BRIEF DESCRIPTION OF THE DRAWINGS

FIG. 1 illustrates an example computing system that supports optical character recognition (OCR) using targeted regions of interest (ROIs) in accordance with one or more embodiments of the present disclosure.
FIG. 2 is a schematic diagram showing a system computing architecture that supports OCR using targeted ROIs in accordance with one or more embodiments of the present disclosure.
FIG. 3 is a dataflow diagram showing example data structures and modules for OCR using targeted ROIs in accordance with one or more embodiments of the present disclosure.
FIG. 4 is an operational example of composite directionality conditions that support OCR using targeted ROIs in accordance with one or more embodiments of the present disclosure.
FIG. 5 is an operational example of a user interface that supports OCR using targeted ROIs in accordance with one or more embodiments of the present disclosure.
FIG. 6 is an operational example of a process that supports OCR using targeted ROIs in accordance with one or more embodiments of the present disclosure.
FIG. 7 is an operational example of a process that supports OCR using targeted ROIs in accordance with one or more embodiments of the present disclosure.
FIG. 8 is an operational example of a process that supports OCR using targeted ROIs in accordance with one or more embodiments of the present disclosure.
FIG. 9 illustrates a process for OCR using targeted ROIs in accordance with one or more embodiments of the present disclosure.

### DETAILED DESCRIPTION

Various embodiments of the present disclosure are described more fully hereinafter with reference to the accompanying drawings, in which some, but not all embodiments of the present disclosure are shown. Indeed, the present disclosure may be embodied in many different forms and should not be construed as limited to the embodiments set forth herein; rather, these embodiments are provided so that this disclosure will satisfy applicable legal requirements. The term "or" is used herein in both the alternative and conjunctive sense, unless otherwise indicated. The terms "illustrative" and "example" are used to be examples with no indication of quality level. Terms such as "computing," "determining," "generating," and/or similar words are used herein interchangeably to refer to the creation, modification, or identification of data. Further, "based on," "based at least in part on," "based at least on," "based upon," and/or similar words are used herein interchangeably in an open-ended manner such that they do not necessarily indicate being based only on or based solely on the referenced element or elements unless so indicated. Like numbers refer to like elements throughout.

### OVERVIEW

Various optical character recognition (OCR) technologies have been widely utilized to covert printed or imaged text into editable or machine-readable text. For example, a computing device equipped with a camera may image a text string, such as a text string on an object and/or a text string in a document. The computing device may then perform one or more OCR operations to identify each character of the text string and output the text string in a format that is editable or otherwise capable of being communicated or analyzed by a computing device. In some examples, OCR technologies may be utilized to identify text strings on various objects. For example, a computing device may utilize one or more OCR operations to identify text strings on license plates, packages, shipping containers, products, vehicles, and/or the like. However, conventional techniques for identifying such text strings may involve manually rotating a computing device such that the text string is displayed horizontally in a preview image. In some other examples, a barcode may be utilized to orient an image for OCR. For example, a computing device may first scan a barcode to determine an orientation of the barcode and by association, an orientation of a text string that is adjacent to the barcode. However, in many applications, text strings are not associated with a barcode, which may prevent OCR from being effectively utilized.

In accordance with one or more examples described herein, improved systems and methods for OCR using targeted regions of interest (ROIs) are provided. For example, one or more processors (e.g., of a computing device) may receive an image of a text string. The one or more processors may then determine a reading direction and/or a character orientation of the text string. In such examples, the one or more processors may cause a user interface (e.g., of the computing device) to display a window corresponding to an ROI on the image. As described herein, the size, position, and/or rotation of the window may correspond to the reading direction and/or character orientation of the text string, which may enable the one or more processors to accurately perform the one or more OCR operations without initially scanning a barcode to determine the orientation of the text string, which may conserve processing resources and enable OCR operations to be performed in a wider variety of contexts where barcodes are not present. Additionally, or alternatively, performing the one or more OCR operations in the ROI may conserve processing resources by limiting the amount of data that is processed to data within the ROI.

In some examples, the one or more processors may receive one or more indications of the reading direction and/or character orientation of the text string from one or more individuals (e.g., from one or more users). For example, a user may provide one or more inputs to the one or more processors via a user interface, which may indicate the reading direction and/or character orientation of the text string. In one illustrative example, a user may interact with a touch screen display (e.g., the user interface) to manually rotate the window (e.g., the ROI), which may implicitly indicate to the one or more processors the reading direction of the text string.

In some examples, the one or more processors may determine a reading direction and/or character orientation of a text string based on one or more object detection operations and/or a mapping between respective objects, respective reading directions, and/or respective character orientations. For example, the one or more processors may detect a specific type of object in an image and determine a reading direction and/or a character orientation of a text string in the image based on the mapping (e.g., the one or more processors may leverage prior knowledge of reading directions and/or character orientations that are used for specific types of objects).

As will be apparent to one of ordinary skill in the art, the describe techniques may provide a myriad of technical advantages when compared to conventional techniques for OCR. For example, the techniques described herein may enable the one or more processors to more effectively perform one or more OCR operations when compared to conventional techniques. For example, the one or more OCR operations may involve scanning or otherwise performing text detection operations based on the reading direction of the text string and/or the character orientation of the text string, which may correspond to the window rotation. As described herein, such techniques may improve the effectiveness and efficiency of OCR operations when compared to conventional techniques.

### DEFINITIONS

In some embodiments, the term "one or more processors" refers to one or more components or devices that are configurable to perform one or more operations, calculations, determinations, or logical processes. In some examples, one or more processors may be subcomponents of one or more computing devices. In some other examples, however, one or more processors may be implemented as virtualized elements of a virtualized computing system or architecture. As described herein, the one or more processors may be implemented by or otherwise included in one or more devices, such as one or more computing devices. For example, a first computing device may include a first processors of the one or more processors and a second computing device may include a second processor of the one or more processors. It should also be noted that the one or more processors may be configured to perform any one or more of the operations described herein. For example, the one or more processors may receive image data representative of an image and determine a composite directionality condition of a text string included in the image.

In some embodiments, the term "user interface" refers to hardware and/or software that is configured to interface with one or more individuals (e.g., one or more users). For example, a user interface may be a device that receives one or more inputs from a user and/or provides one or more outputs to the user, such as a monitor, a display, a speaker, a microphone, a printer, a keyboard, a mouse, a joystick, and/or the like. In some examples, a user interface may be a software application, such as a graphical user interface that is displayed and/or executed on a computing device. In some examples, a user interface may provide an audio and/or visual representation of information. For example, a user interface of a computing device, such as a smartphone, may display one or more images, which may be viewed and/or interacted with by one or more individuals (e.g., via a touchscreen, via one or more buttons). In some examples, an image displayed via a user interface may include a text string, which may be representative of a text string located on an object in a real-world environment (e.g., an image displayed on a user interface may include a representation of a text string located on a shipping container, a package, a product, a document (e.g., an identification document), and/or the like).

In some embodiments, the term "data representative of an image" refers to data or information that represents, indicates, or is otherwise descriptive of an image. In some examples, image data may be generated by one or more sensors and/or one or more computing devices including one or more sensors. For example, a camera may capture an image and generate data representative of the image. The data representative of the image may then be communicated to one or more processors by the camera. In some examples, a user interface may display one or more images based on data representative of the one or more images. For example, one or more processors may transmit data representative of one or more images to a user interface and in response to receiving the data representative of the one or more images, the user interface may generate and/or display the one or more images.

In some embodiments, the term "image" refers to a representation or display of one or more environments, objects, individuals, text strings, and/or any other observable phenomenon. An image may include one or more pixels, which may each have a corresponding color and/or brightness. In some examples, the data representative of an image may include one or more values or indications of respective colors and respective brightness for each pixel of an image. In some examples, an image may be generated using one or more sensors and/or devices including one or more sensors, such as one or more cameras. In some examples, an image may include a window (e.g., a configurable window, a configurable box), which may be utilized and/or configured by one or more users to select and/or focus on one or more regions of an image that includes one or more text strings.

In some embodiments, the term "text string" refers to a sequence of one or more characters, such as one or more numbers, one or more letters, one or more special characters, one or more spaces, and/or the like. In some examples, the one or more characters of a text string may be representative of, indicate, or otherwise correspond to information, such as identification information. For example, a text string may be painted onto a shipping container and the text string may include an identification number for one or more items stored inside of the shipping container. As another illustrative example, a drivers license may include a drivers license number, a birthdate, an expiration date, and physical identifying information, each of which may be examples of text strings. As described herein, a text string and/or a representation of a text string (e.g., a digital representation) may be included in an image. In some examples, a text string and/or a representation of a text string may be positioned or placed in accordance with a specific composite directionality condition.

In some embodiments, the term "optical character recognition operation" refers to an operation, procedure, process, or method for recognizing or otherwise determining one or more characters of a text string using (e.g., based on) an image or a document including the text string. In some examples, one or more processors may determine one or more characters of a text string based on an image of the text string using one or more optical character recognition (OCR) operations. In some examples, an OCR operation may include converting image data into text data (e.g., editable text data and/or searchable text data). For example, one or more processors may receive image data for an image including a text string. The one or more processors may then perform one or more OCR operations to determine or otherwise identify the text string (e.g., the one or more characters in the text string). Once the one or more processors have determined or otherwise identified the text string, the one or more processors may generate and/or output text data (e.g., editable text data and/or searchable text data) representative of the text string. As described herein, a composite directionality condition of a text string in an image may facilitate, aid, or otherwise enable an optical character recognition operation to be performed. For example, one or more processors may receive an indication of or otherwise determine a composite directionality condition of a text string, which may then be utilized as an input for performing an OCR operation.

In some embodiments, the term "composite directionality condition" refers to a design, form, arrangement, characteristic, or condition of a text string. A composite directionality condition may be indicative of or representative of the way that a text string is presented, positioned, read, or written. In some examples, the interpretation of a text string (e.g., by an individual, by a computing device) may be dependent upon initially determining the composite directionality condition of the text string. For example, the techniques described herein provide for a computing device to determine or otherwise be informed of a composite directionality condition of a text string prior to performing one or more OCR operations. Such techniques may enable the computing device to more efficiently and/or effectively perform the one or more OCR operations as a result of having received or determined the composite directionality condition. In some example, a composite directionality condition of a text string may include one or more conditions of a text string, such as a reading direction of a text string and a character orientation of a text string.

In some embodiments, the term "reading direction" refers to a direction or path along which a reader may read or interpret a text string. Some illustrative examples of reading directions may include a left-to-right reading direction, a top-to-bottom reading direction, a right-to-left reading direction, a bottom-to-top reading direction, an angled reading direction, and/or the like. In some examples, a reading direction may be independent of a character orientation of one or more characters in a text string. For example, an individual may read a text string from top-to-bottom regardless of whether the characters of the text string are oriented at 0 or 90 degrees from a horizontal axis.

In some embodiments, the term "character orientation" refers to a rotation and/or rotational angle of one or more characters in a text string. In some examples, a character orientation may be represented or otherwise indicated by an angular value, such as a value from 0 to 360 degrees and/or a value from 0 to 2π radians. As described herein, a character orientation may be described with reference to a horizontal axis. For example, a text string that extends along a horizontal line (e.g., an x-axis) may include one or more characters with character orientations of zero degrees. A text string that extends upwards along a vertical line (e.g., a y-axis) may include one or more characters with character orientations of 90 degrees.

In some embodiments, the term "window" refers to a shape that is displayed via a user interface. As described herein, a window may represent, highlight, or otherwise select a region of a user interface (e.g., a region of interest (ROI)) and/or an image displayed on the user interface for performing one or more operations. For example, a user interface may display a window on an image that represents a region of the image where an OCR is to be performed. In some examples, a window may have a specific geometry, which may be preconfigured or selected by a user. For example, a user may perform one or more actions and/or provide one or more user inputs via a user interface to size, rotate, and/or position a window. For example, a user may interact with a touchscreen of a smartphone to resize a window such that the window includes a text string. In some examples, a rotation or orientation of a window may match a reading direction and/or character orientation of a text string. For example, a user may rotate a window to match a reading direction of a text string. As such, the one or more processors may receive one or more indication of the rotation of the window and determine the reading direction based on the rotation of the window.

In some examples, one or more processors may cause the window to be displayed via the user interface. For example, a user may initiate an OCR application and/or a camera application and the one or more processors may cause the user interface to display the window on an image preview in response to the user initiating the OCR application and/or the camera application. In some examples, the window may be positioned, sized, and/or rotated based on user input. In some other examples, the window may be positioned, sized, and/or rotated automatically (e.g., by the one or more processors) based on the one or more processors detecting the position, size, and/or rotation of a text string in an image.

In some embodiments, the term "region for performing an optical character recognition operation" refers to a region of an image and/or an image preview for an OCR operation to be performed. In some examples, the region for performing the OCR operation may be identified by or otherwise correspond to a window that is displayed via a user interface. For example, a user interface of a computing device may display a window that represents a region for performing an OCR operation.

In some embodiments, the term "object" refers to an item, which may be located in or represented in an image. Some examples of objects may include products, vehicles, signs, individuals, containers, and/or the like. As described herein, an object and/or a representation of an object (e.g., in an image) may be utilized by one or more processors to determine a reading direction of a text string and/or a character orientation of the text string. In such examples, the one or more processors may first determine a type of object based on a received image (e.g., based on received image data) and determine the reading direction of the text string and/or character orientation of the text string based on a mapping or corresponding between the object type and the reading direction and/or the character orientation. For example, the one or more processors may detect a shipping container in an image and determine a reading direction and/or character orientation of a text string located on the shipping container based on a mapping that indicates the reading direction and/or character orientation of the text string. In some examples, the mapping, which may be received by the one or more processors, may indicate one or more reading directions and/or one or more character orientations for one or more object types.

### EXAMPLE SYSTEMS AND PROCESSES OF THE DISCLOSURE

Embodiments of the present disclosure may be implemented in various ways, including as computer program products that comprise articles of manufacture. Such computer program products may include one or more software components including, for example, software objects, methods, data structures, or the like. A software component may be coded in any of a variety of programming languages. An illustrative programming language may be a lower-level programming language such as an assembly language associated with a particular hardware architecture and/or operating system platform. A software component comprising assembly language instructions may require conversion into executable machine code by an assembler prior to execution by the hardware architecture and/or platform. Another example programming language may be a higher-level programming language that may be portable across multiple architectures. A software component comprising higher-level programming language instructions may require conversion to an intermediate representation by an interpreter or a compiler prior to execution.

Other examples of programming languages include, but are not limited to, a macro language, a shell or command language, a job control language, a script language, a database query, or search language, and/or a report writing language. In one or more example embodiments, a software component comprising instructions in one of the foregoing examples of programming languages may be executed directly by an operating system or other software component without having to be first transformed into another form. A software component may be stored as a file or other data storage construct. Software components of a similar type or functionally related may be stored together, such as in a particular directory, folder, or library. Software components may be static (e.g., pre-established, or fixed) or dynamic (e.g., created or modified at the time of execution).

A computer program product may include a non-transitory computer-readable storage medium storing applications, programs, program modules, scripts, source code, program code, object code, byte code, compiled code, interpreted code, machine code, executable instructions, and/or the like (also referred to herein as executable instructions, instructions for execution, computer program products, program code, and/or similar terms used herein interchangeably). Such non-transitory computer-readable storage media include all computer-readable media (including volatile and non-volatile media).

In some embodiments, a non-volatile computer-readable storage medium may include a floppy disk, flexible disk, hard disk, solid-state storage (SSS) (e.g., a solid-state drive (SSD), solid state card (SSC), solid state module (SSM), enterprise flash drive, magnetic tape, or any other non-transitory magnetic medium, and/or the like). A non-volatile computer-readable storage medium may also include a punch card, paper tape, optical mark sheet (or any other physical medium with patterns of holes or other optically recognizable indicia), compact disc read only memory (CD-ROM), compact disc-rewritable (CD-RW), digital versatile disc (DVD), Blu-ray disc (BD), any other non-transitory optical medium, and/or the like. Such a non-volatile computer-readable storage medium may also include read-only memory (ROM), programmable read-only memory (PROM), erasable programmable read-only memory (EPROM), electrically erasable programmable read-only memory (EEPROM), flash memory (e.g., Serial, NAND, NOR, and/or the like), multimedia memory cards (MMC), secure digital (SD) memory cards, SmartMedia cards, CompactFlash (CF) cards, Memory Sticks, and/or the like. Further, a non-volatile computer-readable storage medium may also include conductive-bridging random access memory (CBRAM), phase-change random access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random access memory (FJG RAM), Millipede memory, racetrack memory, and/or the like.

In some embodiments, a volatile computer-readable storage medium may include random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory module (RIMM), dual in-line memory module (DIMM), single in-line memory module (SIMM), video random access memory (VRAM), cache memory (including various levels), flash memory, register memory, and/or the like. It will be appreciated that where embodiments are described to use a computer-readable storage medium, other types of computer-readable storage media may be substituted for, or used in addition to, the computer-readable storage media described above.

As should be appreciated, various embodiments of the present disclosure may also be implemented as methods, apparatuses, systems, computing devices, computing entities, and/or the like. As such, embodiments of the present disclosure may take the form of an apparatus, system, computing device, computing entity, and/or the like executing instructions stored on a computer-readable storage medium to perform certain steps or operations. Thus, embodiments of the present disclosure may also take the form of an entirely hardware embodiment, an entirely computer program product embodiment, and/or an embodiment that comprises a combination of computer program products and hardware performing certain steps or operations.

Embodiments of the present disclosure are described below with reference to block diagrams and flowchart illustrations. Thus, it should be understood that each block of the block diagrams and flowchart illustrations may be implemented in the form of a computer program product, an entirely hardware embodiment, a combination of hardware and computer program products, and/or apparatuses, systems, computing devices, computing entities, and/or the like carrying out instructions, operations, steps, and similar words used interchangeably (e.g., the executable instructions, instructions for execution, program code, and/or the like) on a computer-readable storage medium for execution. For example, retrieval, loading, and execution of code may be performed sequentially such that one instruction is retrieved, loaded, and executed at a time. In some example embodiments, retrieval, loading, and/or execution may be performed in parallel such that multiple instructions are retrieved, loaded, and/or executed together. Thus, such embodiments may produce specifically configured machines performing the steps or operations specified in the block diagrams and flowchart illustrations. Accordingly, the block diagrams and flowchart illustrations support various combinations of embodiments for performing the specified instructions, operations, or steps.

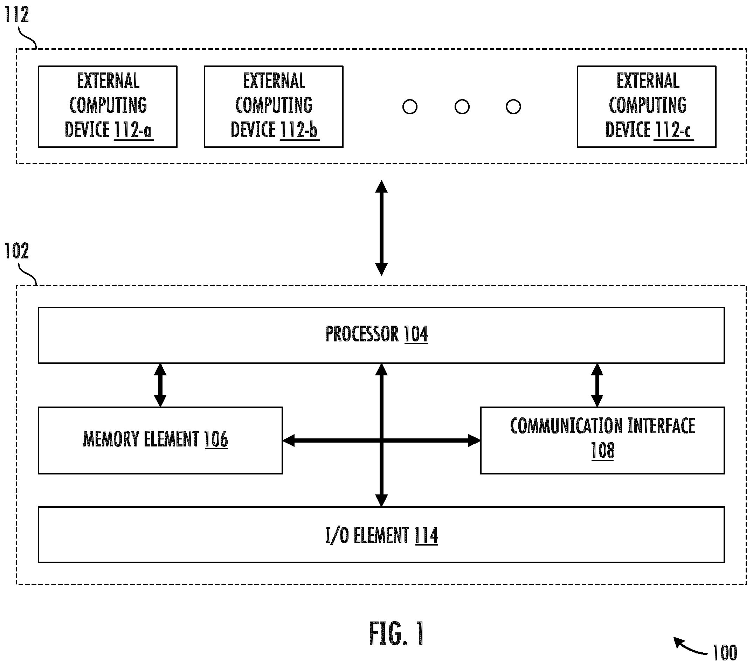

FIG. 1 illustrates an example computing system 100 that supports OCR using targeted ROIs in accordance with one or more embodiments of the present disclosure. The computing system 100 may include a computing device 102 and/or one or more external computing devices 112 (e.g., external computing device 112-a, external computing device 112-b, external computing device 112-c) communicatively coupled to the computing device 102 using one or more wired and/or wireless communication techniques. The computing device 102 may be specially configured to perform one or more steps/operations of one or more techniques described herein. In some embodiments, the computing device 102 may include and/or be in association with one or more mobile device(s), desktop computer(s), laptop(s), server(s), cloud computing platform(s), and/or the like. In some example embodiments, the computing device 102 may be configured to receive and/or transmit one or more datasets, objects, and/or the like from and/or to the external computing devices 112 to perform one or more steps/operations of one or more techniques described herein.

The external computing devices 112, for example, may include and/or be associated with one or more entities that may be configured to receive, transmit, store, and/or manage data, such as image data including one or more text strings. In some examples, the one or more external computing devices 112 may transmit mapping information to the computing device 102. For example, the mapping information may include one or more pairings of specific object types with specific reading directions and/or character orientations for a text string. The computing device 102 may then leverage the image data and/or mapping information to perform one or more OCR operations as described herein. In some examples, the one or more external computing devices 112, for example, may be associated with one or more data repositories, cloud platforms, compute nodes, organizations, and/or the like, which may be individually and/or collectively leveraged by the computing device 102 to obtain and aggregate data for any one or more of the operations described herein.

The computing device 102 may include, or be in communication with, a processor 104 (also referred to as processors, processing circuitry, digital circuitry, and/or similar terms used herein interchangeably) that communicates with other elements within the computing device 102 via a bus, for example. As will be understood, the computing device 102 may be embodied in a number of different ways. The computing device 102 may be configured for a particular use or configured to execute instructions stored in volatile or non-volatile media or otherwise accessible to the processor 104. As such, whether configured by hardware or computer program products, or by a combination thereof, the processor 104 may be capable of performing steps or operations according to embodiments of the present disclosure when configured accordingly. Although the computing device 102 is shown as including a single processor 104, a single memory element 106, a single communication interface 108, and a single I/O element 114, the computing device 102 may include one or more of any of the elements shown. For example, the computing device 102 may include one or more processors 104, which may execute or otherwise perform any one or more of the operations described herein.

In one embodiment, the computing device 102 may further include, or be in communication with, one or more memory elements 106. The memory element 106 may be used to store at least portions of the databases, database instances, database management systems, data, applications, programs, program modules, scripts, source code, object code, byte code, compiled code, interpreted code, machine code, executable instructions, and/or the like being executed by, for example, the processor 104. Thus, the databases, database instances, database management systems, data, applications, programs, program modules, scripts, source code, object code, byte code, compiled code, interpreted code, machine code, executable instructions, and/or the like, may be used to control certain aspects of the operation of the computing device 102 with the assistance of the processor 104.

As indicated, in one embodiment, the computing device 102 may also include one or more communication interfaces 108 for communicating with various computing devices (e.g., external computing devices 112), such as by communicating data, content, information, and/or similar terms used herein interchangeably that may be transmitted, received, operated on, processed, displayed, stored, and/or the like.

The computing system 100 may include one or more input/output (I/O) element(s) 114 for communicating with one or more users. An I/O element 114, for example, may include one or more user interfaces for providing and/or receiving information from one or more users of the computing system 100. The I/O element 114 may include one or more tactile interfaces (e.g., keypads, touch screens, etc.), one or more audio interfaces (e.g., microphones, speakers, etc.), visual interfaces (e.g., display devices, etc.), and/or the like. The I/O element 114 may be configured to receive user input through one or more of the user interfaces from a user of the computing system 100 and provide data to a user through the user interfaces.

In accordance with one or more examples described herein, improved systems and methods for optical character recognition (OCR) using targeted regions of interest (ROIs) are provided. For example, a method for selecting a targeted ROI on a preview screen of a computing device 102 for OCR is provided. The techniques described herein may include multiple embodiments. In a first embodiment, a user may manually switch a configured ROI window into a horizontal or vertical window for OCR. The second embodiment may include a computing device 102 automatically switching a configured ROI window to a horizontal or vertical window based on text direction (e.g., whether the text direction is horizontal or vertical). A third embodiment may include using a full camera preview as an initial ROI and automatically triggering a targeted ROI (e.g., vertical or horizontal) for more accurate scanning based on a direction of text detected in the preview. A fourth embodiment may include allowing a user to freeze a preview screen and select a targeted ROI by touching and resizing and/or repositioning a rectangular box (e.g., a window) on the frozen image. A fifth embodiment may include using a full camera preview as initial ROI to detect an object in the preview and then rendering the targeted ROI automatically based on the object type, positioning and/or orientation. For example, if an object is detected as shipping container, then a vertical ROI may be utilized, as a shipping container usually has vertical numbering. In such examples, the targeted ROI may be rendered based on an object detected in a preview.

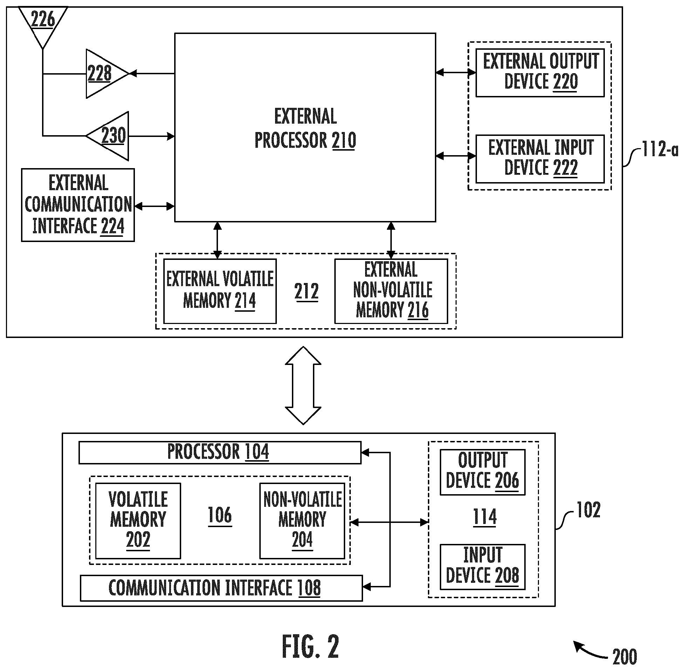

FIG. 2 is a schematic diagram showing a system computing architecture 200 that supports OCR using targeted ROIs in accordance with one or more embodiments of the present disclosure. In some embodiments, the system computing architecture 200 may include the computing device 102 and/or the external computing device 112-a of the computing system 100. The computing device 102 and/or the external computing device 112-a may include a computing apparatus, a computing device, and/or any form of computing entity configured to execute instructions stored on a computer-readable storage medium to perform certain steps or operations.

The computing device 102 may include a processor 104, a memory element 106, a communication interface 108, and/or one or more I/O elements 114 that communicate within the computing device 102 via internal communication circuitry, such as a communication bus and/or the like.

The processor 104 may be embodied as one or more complex programmable logic devices (CPLDs), microprocessors, multi-core processors, coprocessing entities, application-specific instruction-set processors (ASIPs), microcontrollers, and/or controllers. Further, the processor 104 may be embodied as one or more other processing devices or circuitry including, for example, a processor, one or more processors, various processing devices, and/or the like. The term circuitry may refer to an entirely hardware embodiment or a combination of hardware and computer program products. Thus, the processor 104 may be embodied as integrated circuits, application specific integrated circuits (ASICs), field programmable gate arrays (FPGAs), programmable logic arrays (PLAs), hardware accelerators, digital circuitry, and/or the like.

The memory element 106 may include volatile memory 202 and/or non-volatile memory 204. The memory element 106, for example, may include volatile memory 202 (also referred to as volatile storage media, memory storage, memory circuitry, and/or similar terms used herein interchangeably). In one embodiment, a volatile memory 202 may include random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory module (RIMM), dual in-line memory module (DIMM), single in-line memory module (SIMM), video random access memory (VRAM), cache memory (including various levels), flash memory, register memory, and/or the like. It will be appreciated that where embodiments are described to use a computer-readable storage medium, other types of computer-readable storage media may be substituted for, or used in addition to, the computer-readable storage media described above.

The memory element 106 may include non-volatile memory 204 (also referred to as non-volatile storage, memory, memory storage, memory circuitry, and/or similar terms used herein interchangeably). In one embodiment, the non-volatile memory 204 may include one or more non-volatile storage or memory media, including, but not limited to, hard disks, ROM, PROM, EPROM, EEPROM, flash memory, MMCs, SD memory cards, Memory Sticks, CBRAM, PRAM, FeRAM, NVRAM, MRAM, RRAM, SONOS, FJG RAM, Millipede memory, racetrack memory, and/or the like.

In one embodiment, a non-volatile memory 204 may include a floppy disk, flexible disk, hard disk, solid-state storage (SSS) (e.g., a solid-state drive (SSD)), solid state card (SSC), solid state module (SSM), enterprise flash drive, magnetic tape, or any other non-transitory magnetic medium, and/or the like. A non-volatile memory 204 may also include a punch card, paper tape, optical mark sheet (or any other physical medium with patterns of holes or other optically recognizable indicia), compact disc read only memory (CD-ROM), compact disc-rewritable (CD-RW), digital versatile disc (DVD), Blu-ray disc (BD), any other non-transitory optical medium, and/or the like. Such a non-volatile memory 204 may also include read-only memory (ROM), programmable read-only memory (PROM), erasable programmable read-only memory (EPROM), electrically erasable programmable read-only memory (EEPROM), flash memory (e.g., Serial, NAND, NOR, and/or the like), multimedia memory cards (MMC), secure digital (SD) memory cards, SmartMedia cards, CompactFlash (CF) cards, Memory Sticks, and/or the like. Further, a non-volatile computer-readable storage medium may also include conductive-bridging random access memory (CBRAM), phase-change random access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random access memory (FJG RAM), Millipede memory, racetrack memory, and/or the like.

As will be recognized, the non-volatile memory 204 may store databases, database instances, database management systems, data, applications, programs, program modules, scripts, source code, object code, byte code, compiled code, interpreted code, machine code, executable instructions, and/or the like. The term database, database instance, database management system, and/or similar terms used herein interchangeably may refer to a collection of records or data that is stored in a computer-readable storage medium using one or more database models, such as a hierarchical database model, network model, relational model, entity-relationship model, object model, document model, semantic model, graph model, and/or the like.

The memory element 106 may include a non-transitory computer-readable storage medium for implementing one or more aspects of the present disclosure including as a computer-implemented method configured to perform one or more steps/operations described herein. For example, the non-transitory computer-readable storage medium may include instructions that when executed by a computer (e.g., processor 104), cause the computer to perform one or more steps/operations of the present disclosure. For instance, the memory element 106 may store instructions that, when executed by the processor 104, configure the computing device 102 to perform one or more steps/operations described herein.

Embodiments of the present disclosure may be implemented in various ways, including as computer program products that comprise articles of manufacture. Such computer program products may include one or more software components including, for example, software objects, methods, data structures, or the like. A software component may be coded in any of a variety of programming languages. An illustrative programming language may be a lower-level programming language, such as an assembly language associated with a particular hardware framework and/or operating system platform. A software component comprising assembly language instructions may require conversion into executable machine code by an assembler prior to execution by the hardware framework and/or platform. Another example programming language may be a higher-level programming language that may be portable across multiple frameworks. A software component comprising higher-level programming language instructions may require conversion to an intermediate representation by an interpreter or a compiler prior to execution.

Other examples of programming languages include, but are not limited to, a macro language, a shell or command language, a job control language, a script language, a database query, or search language, and/or a report writing language. In one or more example embodiments, a software component comprising instructions in one of the foregoing examples of programming languages may be executed directly by an operating system or other software component without having to be first transformed into another form. A software component may be stored as a file or other data storage construct. Software components of a similar type or functionally related may be stored together, such as in a particular directory, folder, or library. Software components may be static (e.g., pre-established, or fixed) or dynamic (e.g., created or modified at the time of execution).

The computing device 102 may be embodied by a computer program product which includes non-transitory computer-readable storage medium storing applications, programs, program modules, scripts, source code, program code, object code, byte code, compiled code, interpreted code, machine code, executable instructions, and/or the like (also referred to herein as executable instructions, instructions for execution, computer program products, program code, and/or similar terms used herein interchangeably). Such non-transitory computer-readable storage media include all computer-readable media such as the volatile memory 202 and/or the non-volatile memory 204.

The computing device 102 may include one or more I/O elements 114. The I/O elements 114 may include one or more output devices 206 and/or one or more input devices 208 for providing and/or receiving information with a user, respectively. The output devices 206 may include one or more sensory output devices, such as one or more tactile output devices (e.g., vibration devices such as direct current motors, and/or the like), one or more visual output devices (e.g., liquid crystal displays, and/or the like), one or more audio output devices (e.g., speakers, and/or the like), and/or the like. The input devices 208 may include one or more sensory input devices, such as one or more tactile input devices (e.g., touch sensitive displays, push buttons, and/or the like), one or more audio input devices (e.g., microphones, and/or the like), and/or the like.

In addition, or alternatively, the computing device 102 may communicate, via a communication interface 108, with one or more external computing entities such as the external computing device 112-a. The communication interface 108 may be compatible with one or more wired and/or wireless communication protocols.

For example, such communication may be executed using a wired data transmission protocol, such as fiber distributed data interface (FDDI), digital subscriber line (DSL), Ethernet, asynchronous transfer mode (ATM), frame relay, data over cable service interface specification (DOCSIS), or any other wired transmission protocol. In addition, or alternatively, the computing device 102 may be configured to communicate via wireless external communication using any of a variety of protocols, such as general packet radio service (GPRS), Universal Mobile Telecommunications System (UMTS), Code Division Multiple Access 2000 (CDMA2000), CDMA2000 1X (1xRTT), Wideband Code Division Multiple Access (WCDMA), Global System for Mobile Communications (GSM), Enhanced Data rates for GSM Evolution (EDGE), Time Division-Synchronous Code Division Multiple Access (TD-SCDMA), Long Term Evolution (LTE), Evolved Universal Terrestrial Radio Access Network (E-UTRAN), Evolution-Data Optimized (EVDO), High Speed Packet Access (HSPA), High-Speed Downlink Packet Access (HSDPA), IEEE 802.9 (Wi-Fi), Wi-Fi Direct, 802.16 (WiMAX), ultra-wideband (UWB), infrared (IR) protocols, near field communication (NFC) protocols, Wibree, Bluetooth protocols, wireless universal serial bus (USB) protocols, and/or any other wireless protocol.

The external computing device 112-a may include an external processor 210, an external memory element 212, an external communication interface 224, and/or one or more external I/O elements 218 that communicate within the external computing device 112-a via internal communication circuitry, such as a communication bus and/or the like.

The external processor 210 may include one or more processing devices, processors, and/or any other device, circuitry, and/or the like described with reference to the processor 104. The external memory element 212 may include one or more memory devices, media, and/or the like described with reference to the memory element 106. The external memory element 212, for example, may include at least one external volatile memory 214 and/or external non-volatile memory 216. The external communication interface 224 may include one or more wired and/or wireless communication interfaces as described with reference to communication interface 108.

In some embodiments, the external communication interface 224 may be supported by one or more radio circuitry. For instance, the external computing device 112-a may include an antenna 226, a transmitter 228 (e.g., radio), and/or a receiver 230 (e.g., radio).

Signals provided to and received from the transmitter 228 and the receiver 230, correspondingly, may include signaling information/data in accordance with air interface standards of applicable wireless systems. In this regard, the external computing device 112-a may be capable of operating with one or more air interface standards, communication protocols, modulation types, and access types. More particularly, the external computing device 112-a may operate in accordance with any of a number of wireless communication standards and protocols, such as those described above with regard to the computing device 102.

Via these communication standards and protocols, the external computing device 112-a may communicate with various other entities using means such as Unstructured Supplementary Service Data (USSD), Short Message Service (SMS), Multimedia Messaging Service (MMS), Dual-Tone Multi-Frequency Signaling (DTMF), and/or Subscriber Identity Module Dialer (SIM dialer). The external computing device 112-a may also download changes, add-ons, and updates, for instance, to its firmware, software (e.g., including executable instructions, applications, program modules), operating system, and/or the like.

According to one embodiment, the external computing device 112-a may include location determining embodiments, devices, modules, functionalities, and/or the like. For example, the external computing device 112-a may include outdoor positioning embodiments, such as a location module adapted to acquire, for example, latitude, longitude, altitude, geocode, course, direction, heading, speed, universal time (UTC), date, and/or various other information/data. In one embodiment, the location module may acquire data, such as ephemeris data, by identifying the number of satellites in view and the relative positions of those satellites (e.g., using global positioning systems (GPS)). The satellites may be a variety of different satellites, including Low Earth Orbit (LEO) satellite systems, Department of Defense (DOD) satellite systems, the European Union Galileo positioning systems, the Chinese Compass navigation systems, Indian Regional Navigational satellite systems, and/or the like. This data may be collected using a variety of coordinate systems, such as the Decimal Degrees (DD); Degrees, Minutes, Seconds (DMS); Universal Transverse Mercator (UTM); Universal Polar Stereographic (UPS) coordinate systems; and/or the like. Alternatively, the location information/data may be determined by triangulating a position of the external computing device 112-a in connection with a variety of other systems, including cellular towers, Wi-Fi access points, and/or the like. Similarly, the external computing device 112-a may include indoor positioning embodiments, such as a location module adapted to acquire, for example, latitude, longitude, altitude, geocode, course, direction, heading, speed, time, date, and/or various other information/data. Some of the indoor systems may use various position or location technologies including RFID tags, indoor beacons or transmitters, Wi-Fi access points, cellular towers, nearby computing devices (e.g., smartphones, laptops), and/or the like. For instance, such technologies may include the iBeacons, Gimbal proximity beacons, Bluetooth Low Energy (BLE) transmitters, NFC transmitters, and/or the like. These indoor positioning embodiments may be used in a variety of settings to determine the location of someone or something within inches or centimeters.

The external I/O elements 218 may include one or more external output devices 220 and/or one or more external input devices 222 that may include one or more sensory devices described herein with reference to the I/O elements 114. In some embodiments, the external I/O element 218 may include a user interface (e.g., a display, speaker, and/or the like) and/or a user input interface (e.g., keypad, touch screen, microphone, and/or the like) that may be coupled to the external processor 210.

For example, the user interface may be a user application, browser, and/or similar words used herein interchangeably executing on and/or accessible via the external computing device 112-a to interact with and/or cause the display, announcement, and/or the like of information/data to a user. The user input interface may include any of a number of input devices or interfaces allowing the external computing device 112-a to receive data including, as examples, a keypad (hard or soft), a touch display, voice/speech interfaces, motion interfaces, and/or any other input device. In embodiments including a keypad, the keypad may include (or cause display of) the conventional numeric (0-9) and related keys (#, *, and/or the like), and other keys used for operating the external computing device 112-a and may include a full set of alphabetic keys or set of keys that may be activated to provide a full set of alphanumeric keys. In addition to providing input, the user input interface may be used, for example, to activate or deactivate certain functions, such as screen savers, sleep modes, and/or the like.

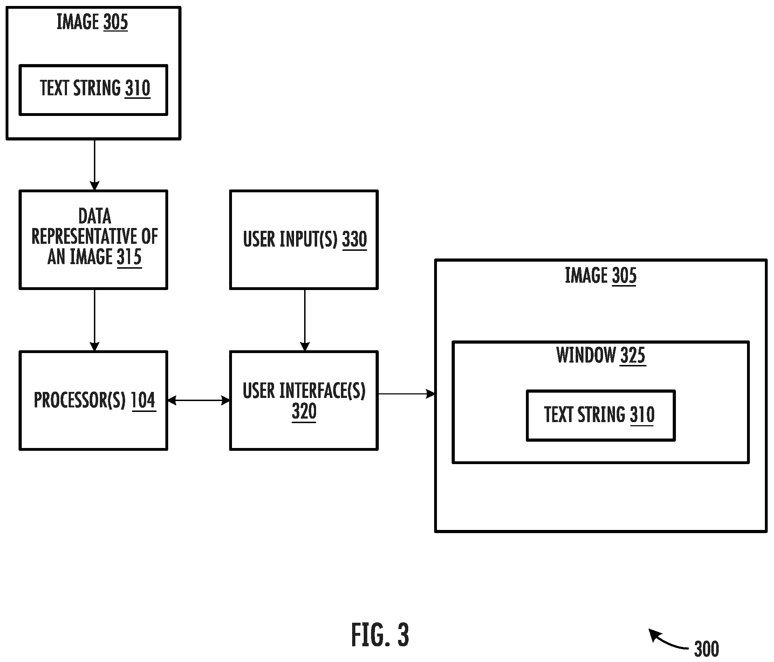

FIG. 3 is a dataflow diagram 300 showing example data structures and modules for OCR using targeted ROIs in accordance with one or more embodiments of the present disclosure. In some examples, one or more processors 104 may receive data representative of an image 315 (e.g., image data). The data representative of the image 315 may be representative of an image 305 including a text string 310. In some embodiments, one or more processors 104 may be examples of one or more components or devices that are configurable to perform one or more operations, calculations, determinations, or logical processes. In some examples, one or more processors 104 may be subcomponents of one or more computing devices. In some other examples, however, one or more processors 104 may be implemented as virtualized elements of a virtualized computing system or architecture. As described herein, the one or more processors 104 may be implemented by or otherwise included in one or more devices, such as one or more computing devices. For example, a first computing device may include a first processor 104 of the one or more processors 104 and a second computing device may include a second processor 104 of the one or more processors 104. It should also be noted that the one or more processors 104 may be configured to perform any one or more of the operations described herein. For example, the one or more processors 104 may receive data representative of an image 315 and determine a composite directionality condition of a text string 310 included in the image 305.

In some embodiments, data representative of an image 315 may include data or information that represents, indicates, or is otherwise descriptive of an image 305. In some examples, image data may be generated by one or more sensors and/or one or more computing devices including one or more sensors. For example, a camera may capture an image 305 and generate data representative of the image. The data representative of the image may then be communicated to one or more processors 104 by the camera. In some examples, a user interface 320 may display one or more images 305 based on data representative of the image 315. For example, one or more processors 104 may transmit data representative of the image 315 to a user interface 320 and in response to receiving the data representative of the image 315, the user interface 320 may generate and/or display the image 305.

In some embodiments, an image 305 may be a representation or display of one or more environments, objects, individuals, text strings 310, and/or any other observable phenomenon. An image 305 may include one or more pixels, which may each have a corresponding color and/or brightness. In some examples, the data representative of an image 315 may include one or more values or indications of respective colors and respective brightness for each pixel of an image 305. In some examples, an image 305 may be generated using one or more sensors and/or devices including one or more sensors, such as one or more cameras. In some examples, an image 305 may include a window 325 (e.g., a configurable window, a configurable box), which may be utilized and/or configured by one or more users to select and/or focus on one or more regions of an image 305 that includes one or more text strings 310.

In some embodiments, a text string 310 may be a sequence of one or more characters, such as one or more numbers, one or more letters, one or more special characters, one or more spaces, and/or the like. In some examples, the one or more characters of a text string 310 may be representative of, indicate, or otherwise correspond to information, such as identification information. For example, a text string 310 may be painted onto a shipping container and the text string 310 may include an identification number for one or more items stored inside of the shipping container. As another illustrative example, a driver's license may include a driver's license number, a birthdate, an expiration date, and physical identifying information, each of which may be examples of text strings 310. As described herein, a text string 310 and/or a representation of a text string 310 (e.g., a digital representation) may be included in an image 305. In some examples, a text string 310 and/or a representation of a text string 310 may be positioned or placed in accordance with a specific composite directionality condition.

In some examples, the one or more processors 104 may cause a user interface 320 to display the image 305 including the text string 310. In some embodiments, a user interface 320 may be hardware and/or software that is configured to interface with one or more individuals (e.g., one or more users). For example, a user interface 320 may be a device that receives one or more inputs from a user and/or provides one or more outputs to the user, such as a monitor, a display, a speaker, a microphone, a printer, a keyboard, a mouse, a joystick, and/or the like. In some examples, a user interface 320 may be a software application, such as a graphical user interface 320 that is displayed and/or executed on a computing device. In some examples, a user interface 320 may provide an audio and/or visual representation of information. For example, a user interface 320 of a computing device, such as a smartphone, may display one or more images 305, which may be viewed and/or interacted with by one or more individuals (e.g., via a touchscreen, via one or more buttons). In some examples, an image 305 displayed via a user interface 320 may include a text string 310, which may be representative of a text string 310 located on an object in a real-world environment (e.g., an image 305 displayed on a user interface 320 may include a representation of a text string 310 located on a shipping container, a package, a product, a document (e.g., an identification document), and/or the like).

In some examples, the one or more processors 104 may cause the user interface 320 to display a window 325 on the image 305, the window 325 representative of a region for performing an OCR operation. In some embodiments, an OCR operation may be an operation, procedure, process, or method for recognizing or otherwise determining one or more characters of a text string 310 using (e.g., based on) an image 305 or a document including the text string 310. In some examples, one or more processors 104 may determine one or more characters of a text string 310 based on an image 305 of the text string 310 using one or more OCR operations. In some examples, an OCR operation may include converting image data into text data (e.g., editable text data and/or searchable text data). For example, one or more processors 104 may receive image data for an image 305 including a text string 310. The one or more processors 104 may then perform one or more OCR operations to determine or otherwise identify the text string 310 (e.g., the one or more characters in the text string 310). Once the one or more processors 104 have determined or otherwise identified the text string 310, the one or more processors 104 may generate and/or output text data (e.g., editable text data and/or searchable text data) representative of the text string 310. As described herein, a composite directionality condition of a text string 310 in an image 305 may facilitate, aid, or otherwise enable an optical character recognition operation to be performed. For example, one or more processors 104 may receive an indication of or otherwise determine a composite directionality condition of a text string 310, which may then be utilized as an input for performing an OCR operation.

In some embodiments, a window 325 may be a shape that is displayed via a user interface 320. As described herein, a window 325 may represent, highlight, or otherwise select a region of a user interface 320 (e.g., a region of interest (ROI)) and/or an image 305 displayed on the user interface 320 for performing one or more operations. For example, a user interface 320 may display a window 325 on an image 305 that represents a region of the image 305 where an OCR is to be performed. In some examples, a window 325 may have a specific geometry, which may be preconfigured or selected by a user. For example, a user may perform one or more actions and/or provide one or more user inputs 330 via a user interface 320 to size, rotate, and/or position a window 325. For example, a user may interact with a touchscreen of a smartphone to resize a window 325 such that the window 325 includes a text string 310. In some examples, a rotation or orientation of a window 325 may match a reading direction and/or character orientation of a text string 310. For example, a user may rotate a window 325 to match a reading direction of a text string 310. As such, the one or more processors 104 may receive one or more indication of the rotation of the window 325 and determine the reading direction based on the rotation of the window 325.

In some examples, one or more processors 104 may cause the window 325 to be displayed via the user interface 320. For example, a user may initiate an OCR application and/or a camera application and the one or more processors 104 may cause the user interface 320 to display the window 325 on an image preview in response to the user initiating the OCR application and/or the camera application. In some examples, the window 325 may be positioned, sized, and/or rotated based on user input 330. In some other examples, the window 325 may be positioned, sized, and/or rotated automatically (e.g., by the one or more processors 104) based on the one or more processors 104 detecting the position, size, and/or rotation of a text string 310 in an image 305.

In some embodiments, a region for performing an optical character recognition operation may be a region of an image 305 and/or an image preview for an OCR operation to be performed. In some examples, the region for performing the OCR operation may be identified by or otherwise correspond to a window 325 that is displayed via a user interface 320. For example, a user interface 320 of a computing device may display a window 325 that represents a region for performing an OCR operation.

In some examples, the one or more processors 104 may perform the OCR operation for the region based on a composite directionality condition of the text string 310. In some embodiments, a composite directionality condition may be a design, form, arrangement, characteristic, or condition of a text string 310. A composite directionality condition may be indicative of or representative of the way that a text string 310 is presented, positioned, read, or written. In some examples, the interpretation of a text string 310 (e.g., by an individual, by a computing device) may be dependent upon initially determining the composite directionality condition of the text string 310. For example, the techniques described herein provide for a computing device to determine or otherwise be informed of a composite directionality condition of a text string 310 prior to performing one or more OCR operations. Such techniques may enable the computing device to more efficiently and/or effectively perform the one or more OCR operations as a result of having received or determined the composite directionality condition. In some example, a composite directionality condition of a text string 310 may include one or more conditions of a text string 310, such as a reading direction of a text string 310 and a character orientation of a text string 310.

In some examples, the composite directionality condition of the text string 310 includes a reading direction of the text string 310 and a character orientation of the text string 310. In some embodiments, a reading direction may be a direction or path along which a reader may read or interpret a text string 310. Some illustrative examples of reading directions may include a left-to-right reading direction, a top-to-bottom reading direction, a right-to-left reading direction, a bottom-to-top reading direction, an angled reading direction, and/or the like. In some examples, a reading direction may be independent of a character orientation of one or more characters in a text string 310. For example, an individual may read a text string 310 from top-to-bottom regardless of whether the characters of the text string 310 are oriented at 0 or 90 degrees from a horizontal axis.

In some embodiments, a character orientation may be a rotation and/or rotational angle of one or more characters in a text string 310. In some examples, a character orientation may be represented or otherwise indicated by an angular value, such as a value from 0 to 360 degrees and/or a value from 0 to 2π radians. As described herein, a character orientation may be described with reference to a horizontal axis. For example, a text string 310 that extends along a horizontal line (e.g., an x-axis) may include one or more characters with character orientations of zero degrees. A text string 310 that extends upwards along a vertical line (e.g., a y-axis) may include one or more characters with character orientations of 90 degrees.

In some examples, the reading direction of the text string 310 includes a top-to-bottom reading direction, a left-to-right reading direction, a right-to-left reading direction, or a bottom-to-top reading direction. In some examples, the character orientation of the text string 310 includes one or more rotational values for one or more characters of the text string 310. In some examples, the one or more processors 104 may receive user input 330 indicative of the composite directionality condition of the text string 310, wherein the OCR operation is based on the user input 330.

In some examples, the one or more processors 104 may determine the composite directionality condition of the text string 310 based on (i) a character orientation of the text string 310 and (ii) a reading direction of the text string 310, wherein performing the OCR operation is based on determining the composite directionality condition. In some examples, the one or more processors 104 may determine an object type for an object in the image 305, a rotational orientation of the object based on the object type, and the composite directionality condition of the text string 310 based on the rotational orientation of the object.

In some embodiments, an object may be an item, which may be located in or represented in an image 305. Some examples of objects may include products, vehicles, signs, individuals, containers, and/or the like. As described herein, an object and/or a representation of an object (e.g., in an image 305) may be utilized by one or more processors 104 to determine a reading direction of a text string 310 and/or a character orientation of the text string 310. In such examples, the one or more processors 104 may first determine a type of object based on a received image 305 (e.g., based on received image data) and determine the reading direction of the text string 310 and/or character orientation of the text string 310 based on a mapping or corresponding between the object type and the reading direction and/or the character orientation. For example, the one or more processors 104 may detect a shipping container in an image 305 and determine a reading direction and/or character orientation of a text string 310 located on the shipping container based on a mapping that indicates the reading direction and/or character orientation of the text string 310. In some examples, the mapping, which may be received by the one or more processors 104, may indicate one or more reading directions and/or one or more character orientations for one or more object types.

In some examples, the one or more processors 104 may receive user input 330 via the user interface 320 that causes the display of the window 325 to change from a first orientation to a second orientation, wherein the OCR operation is based on the second orientation. In some examples, the one or more processors 104 may receive user input 330 that causes the user interface 320 to freeze the image 305. In some examples, the one or more processors 104 may receive user input 330 that selects a size and a position of the window 325 based on freezing the image 305.

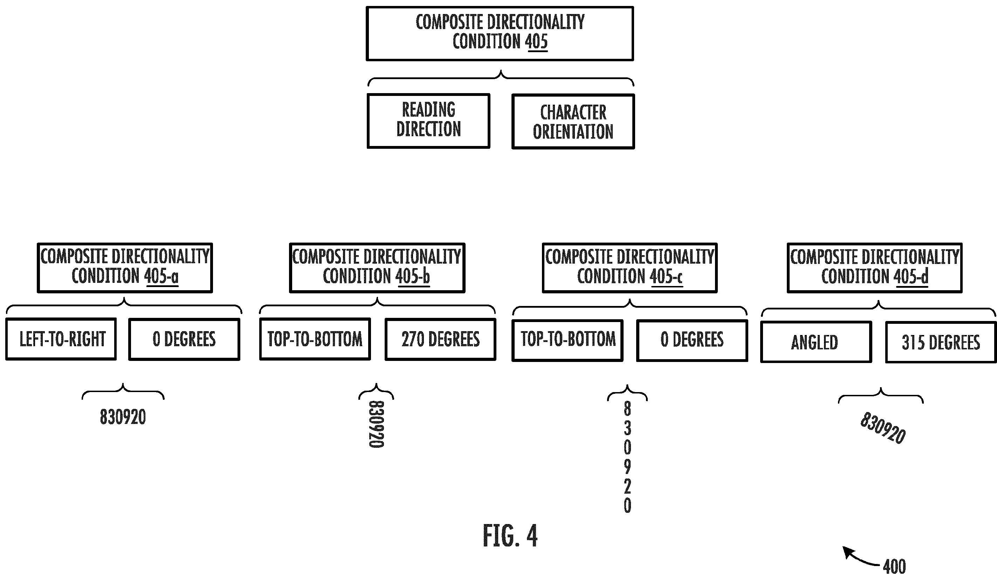

FIG. 4 is an operational example 400 of composite directionality conditions 405 that support OCR using targeted ROIs in accordance with one or more embodiments of the present disclosure. As shown, a composite directionality condition 405 may be comprised of a reading direction of a text string and/or a character orientation of the text string. The operational example 400 includes illustrations of an example text string (e.g., "830920") exhibiting or otherwise configured according to four example composite directionality conditions 405.

For example, when the text string has a reading direction of left-to-right and each character of the text string is oriented at a rotational angle of zero degrees, the text string may exhibit or otherwise be arranged in accordance with the composite directionality condition 405-a. When the text string has a reading direction of top-to-bottom and each character of the text string is orientated at a rotational angle of 270 degrees, the text string may be exhibit or otherwise be arranged in accordance with the composite directionality condition 405-b. When the text string has a reading direction of top-to-bottom and each character of the text string is orientated at a rotational angle of zero degrees, the text string may exhibit or otherwise be arranged in accordance with the composite directionality condition 405-c. When the text string has an angled reading direction and each character of the text string is orientated at a rotational angle of 315 degrees, the text string may exhibit or otherwise be arranged in accordance with the composite directionality condition 405-d.

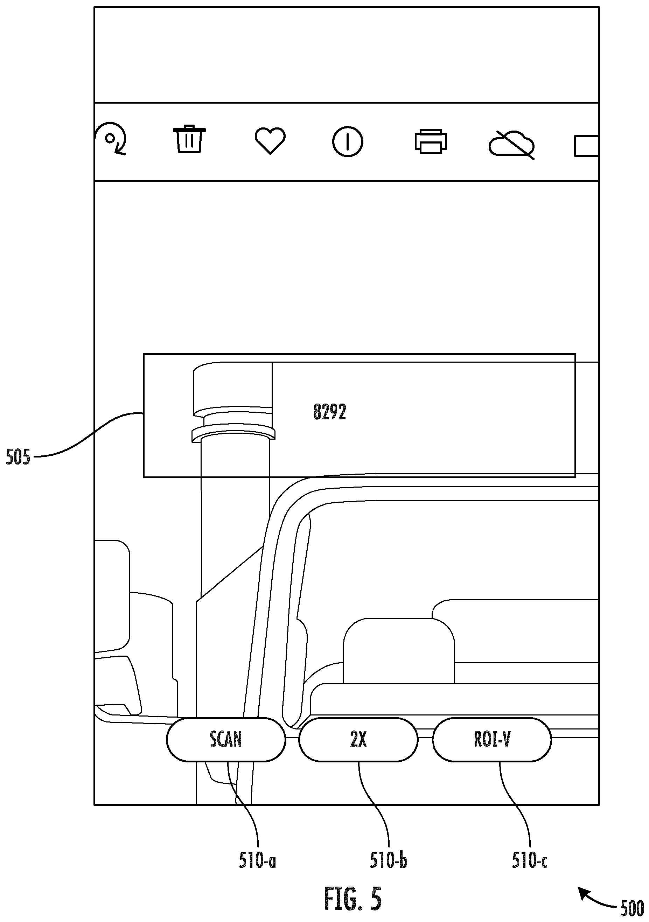

FIG. 5 is an operational example 500 of a user interface that supports OCR using targeted ROIs in accordance with one or more embodiments of the present disclosure. The user interface may be an example of a user interface of a computing device, such as a smartphone. As shown, the user interface may display an image and a window 505 that is superimposed onto the image. The window 505 may be an example of an ROI. The window 505 may have an orientation, size, and/or position, which may be configured to match an orientation, size, and/or position of the text string. For example, a user may interact with the user interface to select an orientation, size, and/or position of the window.

In some examples, the user interface may display one or more selectable icons 510, which may be selected by a user and cause one or more operations to be performed. For example, selecting the selectable icon 510-a (e.g., by pressing the touchscreen) may initiate one or more OCR operations (e.g., one or more scans), selecting the selectable icon 510-b may initiate one or more zoom operations (e.g., to increase the size of the image by 2x), and selecting the selectable icon 510-c may initiate one or more window adjustment operations. As one illustrative example, selecting the selectable icon 510-c may change the shape of the window 505 from a horizontal rectangle to a vertical rectangle. In some examples, selecting the selectable icon 510-c may select or otherwise allow a user to cycle through one or more composite directionality conditions, one or more reading directions, and/or one or more character orientations for a text string such that one or more OCR operations are performed in accordance with the selected parameters. In some examples, there may be a correspondence or mapping between one or more composite directionality conditions, one or more reading directions, one or more character orientations, and/or one or more orientations for the window 505. For example, a horizontal orientation of the window 505 (e.g., ROI-H) may correspond to a left-to-right reading direction and a vertical orientation of the window 505 (e.g., ROI-V) may correspond to a top-to-bottom reading direction.

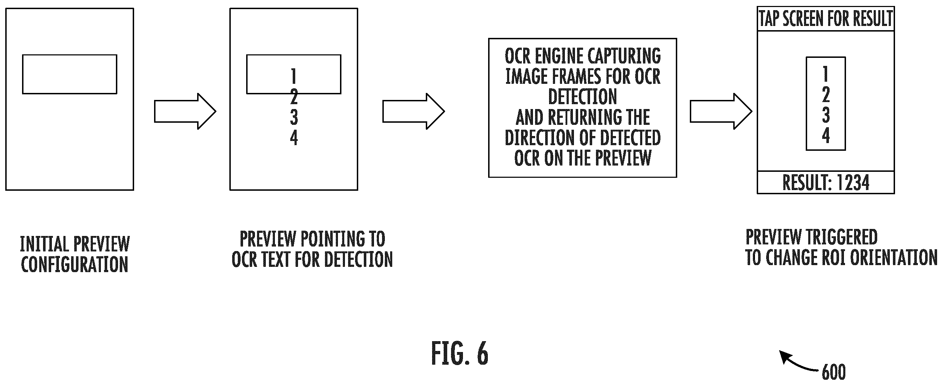

FIG. 6 is an operational example 600 of a process that supports OCR using targeted ROIs in accordance with one or more embodiments of the present disclosure. Specifically, FIG. 6 depicts operations of the process. In some embodiments, the process is embodied by computer program code stored on a non-transitory computer-readable storage medium of a computer program product configured for execution to perform the process as depicted and described. Additionally, or alternatively, in some embodiments, the process is performed by at least one specially configured computing device, such as at least one computing device 102 alone or in communication with at least one other component, device, system, and/or the like. In this regard, in some such embodiments, the computing device 102 is specially configured by computer-coded instructions (e.g., computer program instructions) stored thereon, for example in the memory element 106 and/or another component depicted and/or described herein and/or otherwise accessible to the computing device 102, for performing the operations as depicted and described. In some embodiments, the computing device 102 is in communication with at least one external apparatus, system, device, and/or the like, to perform at least one of the operations as depicted and described. For example, the computing device 102, in some embodiments, is in communication with an external computing device 112, a client device, and/or the like. For purposes of simplifying the description, the process is described as performed by and from the perspective of the computing device 102.

As shown, the computing device 102 may generate and/or display (e.g., via a user interface) an image. The image may include a window, which may be representative of an ROI. In some examples, the window may at least partially overlap with a text string in the image (e.g., "1234"). In some examples, the computing device 102 may perform one or more operations (e.g., one or more OCR operations) based on the window (e.g., in the ROI corresponding to the window), which may output a reading direction of the text string and/or a character orientation of the text string. In some examples, the computing device 102 may then change an orientation of the window based on the reading direction and/or character orientation that is output. In such examples, changing the orientation of the window may serve to identify the text that has been selected for one or more OCR operations (e.g., identify the text that was previously scanned using OCR). In some examples, changing the orientation of the window may serve to configure an ROI for one or more subsequent OCR operations. In such examples, the computing device 102 may perform the one or more subsequent OCR operations for the ROI corresponding to the window.

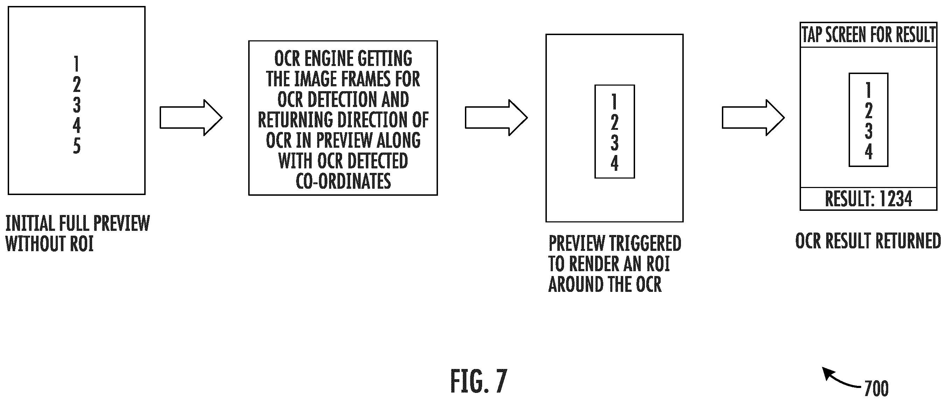

FIG. 7 is an operational example 700 of a process that supports OCR using targeted ROIs in accordance with one or more embodiments of the present disclosure. Specifically, FIG. 7 depicts operations of the process. In some embodiments, the process is embodied by computer program code stored on a non-transitory computer-readable storage medium of a computer program product configured for execution to perform the process as depicted and described. Additionally, or alternatively, in some embodiments, the process is performed by at least one specially configured computing device, such as at least one computing device 102 alone or in communication with at least one other component, device, system, and/or the like. In this regard, in some such embodiments, the computing device 102 is specially configured by computer-coded instructions (e.g., computer program instructions) stored thereon, for example in the memory element 106 and/or another component depicted and/or described herein and/or otherwise accessible to the computing device 102, for performing the operations as depicted and described. In some embodiments, the computing device 102 is in communication with at least one external apparatus, system, device, and/or the like, to perform at least one of the operations as depicted and described. For example, the computing device 102, in some embodiments, is in communication with an external computing device 112, a client device, and/or the like. For purposes of simplifying the description, the process is described as performed by and from the perspective of the computing device 102.

As shown, the computing device 102 may generate and/or display (e.g., via a user interface) an image. The image may not include a window (e.g., the entire preview or frame may be utilized as an ROI). In some examples, the computing device 102 may perform one or more operations (e.g., one or more OCR operations), which may output a reading direction of the text string and/or a character orientation of the text string. In some examples, the computing device 102 may then generate a window based on the reading direction and/or character orientation that is output. For example, an orientation of the window may be based on the reading direction and/or the character orientation. In some examples, changing the orientation of the window may serve to configure an ROI for one or more subsequent OCR operations, which may have improved accuracy when compared to one or more previous OCR operations performed without the window. In such examples, the computing device 102 may perform the one or more subsequent OCR operations for the ROI corresponding to the window.

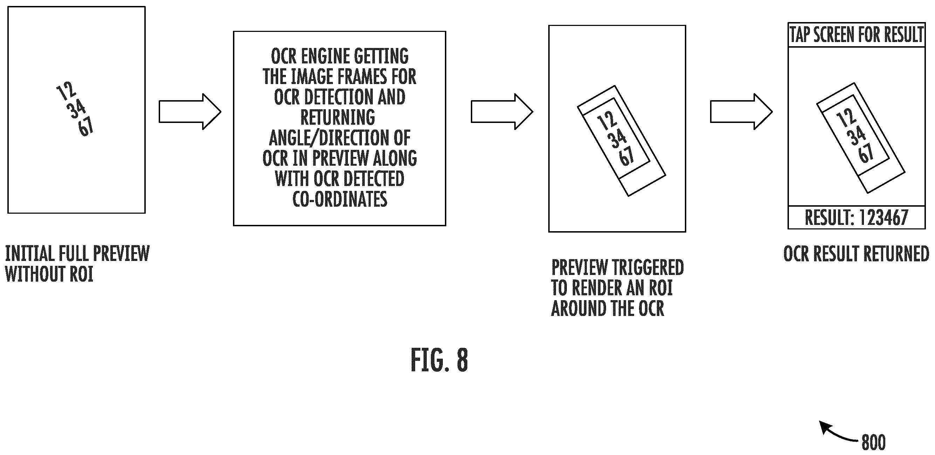

FIG. 8 is an operational example 800 of a process that supports OCR using targeted ROIs in accordance with one or more embodiments of the present disclosure. Specifically, FIG. 8 depicts operations of the process. In some embodiments, the process is embodied by computer program code stored on a non-transitory computer-readable storage medium of a computer program product configured for execution to perform the process as depicted and described. Additionally, or alternatively, in some embodiments, the process is performed by at least one specially configured computing device, such as at least one computing device 102 alone or in communication with at least one other component, device, system, and/or the like. In this regard, in some such embodiments, the computing device 102 is specially configured by computer-coded instructions (e.g., computer program instructions) stored thereon, for example in the memory element 106 and/or another component depicted and/or described herein and/or otherwise accessible to the computing device 102, for performing the operations as depicted and described. In some embodiments, the computing device 102 is in communication with at least one external apparatus, system, device, and/or the like, to perform at least one of the operations as depicted and described. For example, the computing device 102, in some embodiments, is in communication with an external computing device 112, a client device, and/or the like. For purposes of simplifying the description, the process is described as performed by and from the perspective of the computing device 102.

As shown, the computing device 102 may generate and/or display (e.g., via a user interface) an image. The image may not include a window (e.g., the entire preview or frame may be utilized as an ROI). In some examples, the computing device 102 may perform one or more operations (e.g., one or more OCR operations), which may output a reading direction of the text string and/or a character orientation of the text string. In some examples, the computing device 102 may then generate a window based on the reading direction and/or character orientation that is output. For example, an orientation of the window may be based on the reading direction and/or the character orientation. In some examples, changing the orientation of the window may serve to configure an ROI for one or more subsequent OCR operations, which may have improved accuracy when compared to one or more previous OCR operations performed without the window. In such examples, the computing device 102 may perform the one or more subsequent OCR operations for the ROI corresponding to the window.

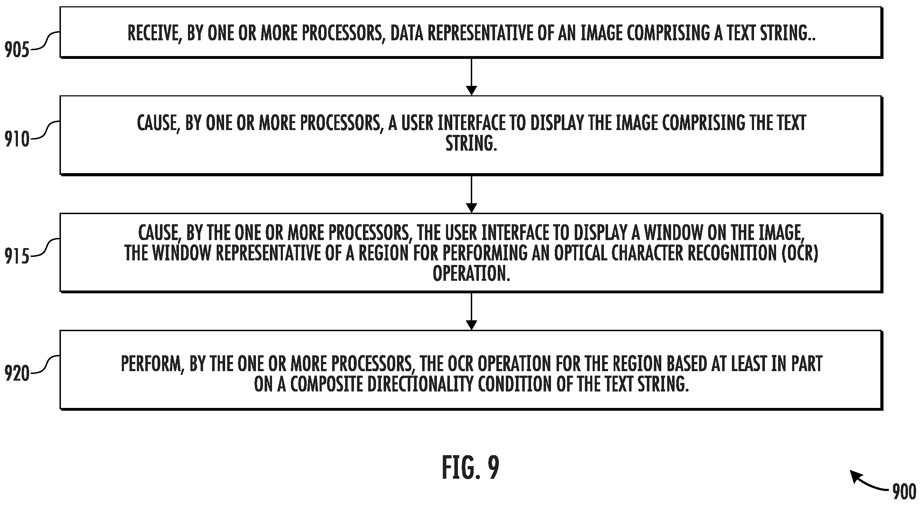

FIG. 9 illustrates a process 900 for OCR using targeted ROIs in accordance with one or more embodiments of the present disclosure. Specifically, FIG. 9 depicts operations of an example process 900. In some embodiments, the process 900 is embodied by computer program code stored on a non-transitory computer-readable storage medium of a computer program product configured for execution to perform the process as depicted and described. Additionally, or alternatively, in some embodiments, the process 900 is performed by at least one specially configured computing device, such as at least one computing device 102 alone or in communication with at least one other component, device, system, and/or the like. In this regard, in some such embodiments, the computing device 102 is specially configured by computer-coded instructions (e.g., computer program instructions) stored thereon, for example in the memory element 106 and/or another component depicted and/or described herein and/or otherwise accessible to the computing device 102, for performing the operations as depicted and described. In some embodiments, the computing device 102 is in communication with at least one external apparatus, system, device, and/or the like, to perform at least one of the operations as depicted and described. For example, the computing device 102, in some embodiments, is in communication with an external computing device 112, a client device, and/or the like. For purposes of simplifying the description, the process 900 is described as performed by and from the perspective of the computing device 102.

The process 900 begins at operation 905. At operation 905, the computing device 102 includes means such as the one or more processors 104, the one or more memory elements 106, the communication interface 108, the output device 206, the input device 208, or a combination thereof, to receive, by the one or more processors 104, data representative of an image comprising a text string.

At operation 910, the computing device 102 includes means such as the one or more processors 104, the one or more memory elements 106, the communication interface 108, the output device 206, the input device 208, or a combination thereof, to cause, by the one or more processors 104, a user interface to display the image comprising the text string.

At operation 915, the computing device 102 includes means such as the one or more processors 104, the one or more memory elements 106, the communication interface 108, the output device 206, the input device 208, or a combination thereof, to cause, by the one or more processors 104, the user interface to display a window on the image, the window representative of a region for performing an OCR operation.

At operation 920, the computing device 102 includes means such as the one or more processors 104, the one or more memory elements 106, the communication interface 108, the output device 206, the input device 208, or a combination thereof, to perform, by the one or more processors, the OCR operation for the region based at least in part on a composite directionality condition of the text string.

### CONCLUSION

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

In some embodiments, some of the operations above may be modified or further amplified. Furthermore, in some embodiments, additional optional operations may be included. Modifications, amplifications, or additions to the operations above may be performed in any order and in any combination.

Although an example processing system has been described above, implementations of the subject matter and the functional operations described herein can be implemented in other types of digital electronic circuitry, or in computer software, firmware, or hardware, including the structures disclosed in this specification and their structural equivalents, or in various combinations.

Embodiments of the subject matter and the operations described herein can be implemented in digital electronic circuitry, or in computer software, firmware, or hardware, including the structures disclosed in this specification and their structural equivalents, or in various combinations. Embodiments of the subject matter described herein can be implemented as at least one computer program, i.e., at least one module of computer program instructions, encoded on computer storage medium for execution by, or to control the operation of, information/data processing apparatus. Alternatively, or in addition, the program instructions can be encoded on an artificially generated, propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination. Moreover, while a computer storage medium is not a propagated signal, a computer storage medium can be a source or destination of computer program instructions encoded in an artificially generated, propagated signal. The computer storage medium can also be, or be included in, at least one separate physical component or media (e.g., multiple CDs, disks, or other storage devices).

The operations described herein can be implemented as operations performed by an information/data processing apparatus on information/data stored on at least one computer-readable storage device or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or any combination thereof. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., at least one script stored in a markup language document), in a single file dedicated to the program in question, or in multiple coordinated files (e.g., files that store at least one module, sub-program, or portion of code). A computer program can be deployed to be executed on one computer or on multiple computers that are located at one site or distributed across multiple sites and interconnected by a communication network.

The processes and logic flows described herein can be performed by at least one programmable processor executing at least one computer program to perform actions by operating on input information/data and generating output. Processors suitable for the execution of a computer program include, by way of example, both general and special purpose microprocessors, and any processor of any kind of digital computer. Generally, a processor will receive instructions and information/data from a read-only memory or a random access memory or both. The essential elements of a computer are a processor for performing actions in accordance with instructions and at least one memory device for storing instructions and data. Generally, a computer will also include, or be operatively coupled to receive information/data from or transfer information/data to, or both, at least one mass storage device for storing data, e.g., magnetic, magneto-optical disks, or optical disks.

However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of at least one such back-end, middleware, or front-end components. The components of the system can be interconnected by any form or medium of digital information/data communication, e.g., a communication network. Examples of communication networks include a local area network ("LAN") and a wide area network ("WAN"), an inter- network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable sub combination. Moreover, although features may be described above as acting in certain combinations and even initially claimed as such, at least one feature from a claimed combination can in some cases be excised from the combination, and the claimed combination may be directed to a sub combination or variation of a sub combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A method comprising:
receiving, by one or more processors, data representative of an image comprising a text string;
causing, by the one or more processors, a user interface to display the image comprising the text string;
causing, by the one or more processors, the user interface to display a window on the image, the window representative of a region for performing an optical character recognition (OCR) operation; and
performing, by the one or more processors, the OCR operation for the region based at least in part on a composite directionality condition of the text string.

2. The method of claim 1, wherein the composite directionality condition of the text string comprises (i) a reading direction of the text string and (ii) a character orientation of the text string.

3. The method of claim 2, wherein the reading direction of the text string comprises (i) a top-to-bottom reading direction, (ii) a left-to-right reading direction, (iii) a right-to-left reading direction, or (iv) a bottom-to-top reading direction.

4. The method of claim 2, wherein the character orientation of the text string comprises one or more rotational values for one or more characters of the text string.

5. The method of claim 1, further comprising:
receiving, by the one or more processors, user input indicative of the composite directionality condition of the text string, wherein the OCR operation is based at least in part on the user input.

6. The method of claim 1, further comprising:
determining, by the one or more processors, the composite directionality condition of the text string based at least in part on (i) a character orientation of the text string and (ii) a reading direction of the text string, wherein performing the OCR operation is based at least in part on determining the composite directionality condition.

7. The method of claim 1, further comprising:
determining, by the one or more processors, an object type for an object in the image;
determining, by the one or more processors, a rotational orientation of the object based at least in part on the object type; and
determining, by the one or more processors, the composite directionality condition of the text string based at least in part on the rotational orientation of the object.

8. The method of claim 7, wherein the object comprises a shipping container.

9. The method of claim 1, further comprising:
receiving, by the one or more processors, user input via the user interface that causes the display of the window to change from a first orientation to a second orientation, wherein the OCR operation is based at least in part on the second orientation.

10. The method of claim 1, further comprising:
receiving, by the one or more processors, user input that causes the user interface to freeze the image; and
receiving, by the one or more processors, user input that selects a size and a position of the window based at least in part on freezing the image.

11. A system comprising:
a user interface; and
one or more processors in communication with the user interface, the one or more processors configured to:
receive data representative of an image comprising a text string;
cause the user interface to display the image comprising the text string;
cause the user interface to display a window on the image, the window representative of a region for performing an optical character recognition (OCR) operation; and
perform the OCR operation for the region based at least in part on a composite directionality condition of the text string.

12. The system of claim 11, wherein the composite directionality condition of the text string comprises (i) a reading direction of the text string and (ii) a character orientation of the text string.

13. The system of claim 12, wherein the reading direction of the text string comprises (i) a top-to-bottom reading direction, (ii) a left-to-right reading direction, (iii) a right-to-left reading direction, or (iv) a bottom-to-top reading direction.

14. The system of claim 12, wherein the character orientation of the text string comprises one or more rotational values for one or more characters of the text string.

15. An apparatus comprising:
one or more processors; and
a memory storing instructions that, when executed by the one or more processors, cause the apparatus to:
receive data representative of an image comprising a text string;
cause a user interface to display the image comprising the text string;
cause the user interface to display a window on the image, the window representative of a region for performing an optical character recognition (OCR) operation; and
perform the OCR operation for the region based at least in part on a composite directionality condition of the text string.
